# EUROPÄISCHE PATENTSCHRIFT

(11) **EP 2 110 563 B1**
(45) Veröffentlichungstag und Bekanntmachung des Hinweises auf die Patenterteilung: **26.06.2013**
(21) Anmeldenummer: 09002008.2
(22) Anmeldetag: 13.02.2009
(51) Int. Cl.: F15B 13/08, F16K 31/524, F16K 27/00, F15B 20/00

(54) **Ventilanordnung mit Zentralabsperreinrichtung**
Valve assembly with central fluid cut-off device
Agencement de soupape doté d'un dispositif de fermeture central

(30) Priorität: 15.04.2008 DE 102008018837
(43) Veröffentlichungstag der Anmeldung: 21.10.2009
(73) Patentinhaber: FESTO AG & Co. KG, 73734 Esslingen (DE)
(72) Erfinder: Höhn, Ralf, 70596 Stuttgart (DE); Kühbauch, Heiko, 73257 Köngen (DE)
(74) Vertreter: Abel, Martin

(56) Entgegenhaltungen:
- DE-A1-102006 010 844
- JP-A- 10 038 119
- US-B1- 6 425 416

## Beschreibung

Die Erfindung betrifft eine Ventilanordnung, mit einer Montagebasis, die von mehreren Verbraucher-Anschlusskanälen durchsetzt ist, die einerseits an einer gemeinsamen Montagefläche der Montagebasis ausmünden und andererseits zu abseits der Montagefläche an der Montagebasis ausmündenden, den Anschluss von zu Verbrauchern führenden Fluidleitungen ermöglichenden Anschlussöffnungen führen, wobei an der Montagefläche ein mit mehreren unabhängig voneinander betreibbaren Ventileinheiten ausgestatteter Ventilblock mit einer Grundfläche voraus derart montierbar oder montiert ist, dass an der Grundfläche ausmündende, von den einzelnen Ventileinheiten steuerbare Verbraucher-Ventilkanäle der Ventileinheiten mit den Verbraucher-Anschlusskanälen der Montagebasis in fluidischer Verbindung stehen.

Eine aus der EP 0 968 372 B1 bekannte Ventilanordnung dieser Art enthält eine plattenförmige Montagebasis, die unter anderem von Verbraucher-Anschlusskanälen durchsetzt ist, die über abgehende Fluidleitungen mit zu betätigenden Verbrauchern verbindbar sind. Die Montagebasis fungiert als fluidische Multipol-Anschlusseinrichtung für einen sich aus mehreren Ventileinheiten zusammensetzenden Ventilblock, der als Einheit austauschbar an der Montagebasis fixierbar ist. Im Falle eines Defektes einer Ventileinheit oder aus sonstigen, eine Umrüstung erforderlich machenden Gründen, kann somit der Ventilblock nach Bedarf montiert und demontiert werden, ohne die zu den Verbrauchern führenden Fluidleitungen einzeln lösen zu müssen. Die Montagebasis kann am Einsatzort verbleiben und nur der Ventilblock als Ganzes wird entfernt. Da insbesondere im Falle einer Fehlfunktion des Ventilblockes vor einem Austausch nicht mehr die Möglichkeit besteht, die angeschlossenen Verbraucher in ihre Grundstellung zu fahren, kann das Entfernen des Ventilblockes unerwünschte Funktionen angeschlossener Verbraucher zur Folge haben, beispielsweise ein Öffnen von fluidbetätigten Greifern oder ein Ausfahren von Arbeitszylindern. Hieraus können kritische Situationen entstehen, die einer vorherigen aufwändigen Absicherung bedürfen.

Aus der DE 10 2006 010 844 A1 ist eine Ventilbatterie bekannt, die mehrere auf einem Fluidverteiler sitzende Steuerventile enthält, die jeweils mehrere mit Verbrauchern verbindbare Arbeitskanäle steuern. Alle Steuerventile sind an einen gemeinsamen Versorgungskanal angeschlossen, der mittels eines Sicherheitsventils abgesperrt werden kann.

Es ist die Aufgabe der vorliegenden Erfindung, bei einer Ventilanordnung der eingangs genannten Art Maßnahmen zu treffen, die einen zumindest weitestgehend komplikationslosen Austausch eines Ventilblockes, insbesondere bei einem Störfall, ermöglichen.

Zur Lösung dieser Aufgabe ist vorgesehen, dass die Montagebasis mit einer ein gemeinsames Absperren und Öffnen aller Verbraucher-Anschlusskanäle ermöglichenden Zentralabsperreinrichtung ausgestattet ist.

Auf diese Weise können die Verbraucher-Anschlusskanäle der Montagebasis vor einem Abnehmen oder Austausch des Ventilblockes durch einen zentralen Betätigungsvorgang gemeinsam abgesperrt werden. In der Folge bleibt das in den zu den Verbrauchern führenden Fluidleitungen befindliche Fluid eingesperrt und die Verbraucher, insbesondere Aktuatoren wie Linearantriebe, Drehantriebe, Greifer etc., verharren in ihrer gegenwärtigen Stellung. Kritische Aktionen der angeschlossenen Verbraucher sind somit ausgeschlossen, der Ventilblock kann problemlos ausgetauscht werden. Nach einem Austausch werden die Verbraucher-Anschlusskanäle durch die Zentralabsperrung wieder geöffnet, so dass der Betrieb ohne Gefährdung und oft auch ohne neue Initialisierung des gesamten Systems wieder aufgenommen werden kann.

Vorteilhafte Weiterbildungen der Erfindung gehen aus den Unteransprüchen hervor.

Durch die als Multipol-Anschlusseinrichtung fungierende Montagebasis hindurch findet zweckmäßigerweise auch die Fluidversorgung des Ventilblockes statt, sei es allein mit dem den von den Ventileinheiten zu steuernden Verbrauchern zuzuführenden Druckmedium oder auch gegebenenfalls dem zur elektropneumatischen Vorsteuerung der Ventileinheiten genutzten Druckmedium. In diesem Falle ist es von Vorteil, wenn auch der hierzu genutzte, die Montagebasis durchsetzende mindestens eine Versorgungs-Anschlusskanal, gemeinsam mit den Verbraucher-Anschlusskanälen, in die Funktion der Zentralabsperreinrichtung integriert ist. Somit ist die Zentralabsperreinrichtung in der Lage, alle die Montagebasis durchsetzenden Anschlusskanäle, seien es Verbraucher-Anschlusskanäle oder Versorgungs-Anschlusskanäle, gemeinsam und insbesondere gleichzeitig abzusperren oder zu öffnen, um einen raschen und reibungslosen Ventilblocktausch durchführen zu können.

Alle zum Anschließen von Fluidleitungen dienenden Anschlussöffnungen befinden sich zweckmäßigerweise an einer gemeinsamen Anschlussfläche der Montagebasis, wobei diese Anschlussfläche zweckmäßigerweise an einer der Montagefläche entgegengesetzten Seite der Montagebasis platziert ist.

Prinzipiell könnte die Zentralabsperreinrichtung für eine beispielsweise funkgesteuerte Fernbetätigung ausgelegt sein.

Da ein Austausch eines Ventilblockes jedoch sowieso eine Präsenz vor Ort erfordert, wird es als vorteilhaft angesehen, ein zum Umschalten zwischen der Absperrstellung und der Offenstellung der Zentralabsperreinrichtung nutzbares Zentralbetätigungsglied als unmittelbare Komponente der Montagebasis auszuführen. Hierbei ist es zweckmäßig, wenn das Zentralbetätigungsglied aufgrund manueller Betätigung durch rein mechanische Interaktion den Umschaltvorgang der Zentralabsperreinrichtung auslöst, so dass auf unterstützende Fremdenergie, insbesondere elektrische Energie, verzichtet werden kann, die in einem Störfall oftmals nicht mehr zur Verfügung steht. Es besteht gleichwohl die Möglichkeit, alternativ oder zusätzlich ein Zentralbetätigungsglied vorzusehen, das Bestandteil einer das Umschalten der Zentralabsperrvorrichtung durch elektrische Signale hervorrufenden elektrischen Betätigungsvorrichtung ist. Beispielsweise kann es sich hier um einen Kippschalter oder Drehschalter handeln.

Die Funktion des gemeinsamen Absperrens und Öffnens der in der Montagebasis vorhandenen Anschlusskanäle, seien es Verbraucher-Anschlusskanäle oder auch zusätzliche Versorgungs-Anschlusskanäle, übernimmt zweckmäßigerweise mindestens ein in den Verlauf der Anschlusskanäle eingeschaltetes, wahlweise in eine Offenstellung oder in eine Schließstellung schaltbares Absperrventil. Insbesondere in Verbindung mit einer nicht zu großen Anzahl von Anschlusskanälen kann sämtlichen Anschlusskanälen gemeinsam ein einziges Absperrventil zugeordnet sein. Denkbar wäre hier beispielsweise ein Absperrventil mit einem sämtliche Anschlusskanäle durchquerenden Flachschieber, der eine der Anzahl der Anschlusskanäle entsprechende Anzahl von Durchbrechungen hat, die jeweils gleichzeitig wahlweise im Verlauf der Anschlusskanäle oder außerhalb den Anschlusskanälen positionierbar sind.

Trotz eines Bedarfes an einer größeren Anzahl von Absperrventilen ist es allerdings im Regelfall, weil auf konventionelle Ventilkomponenten zurückgegriffen werden kann, vorteilhafter, wenn die Montagebasis mehrere gemeinsam betätigbare Absperrventile aufweist, die jeweils zur Steuerung eines einzigen Anschlusskanals oder einer Gruppe von Anschlusskanälen eingesetzt werden.

Zweckmäßig ist es, dem gegebenenfalls vorhandenen mindestens einen Versorgungs-Anschlusskanal ein eigenes Absperrventil zuzuordnen, zusätzlich zu dem mindestens einen für die Steuerung der Verbraucher-Anschlusskanäle vorhandenen Absperrventil.

In der Regel ist jede Ventileinheit des Ventilblockes mit zwei Verbraucher-Ventilkanälen ausgestattet, die mit je einem eigenen Verbraucher-Anschlusskanal der Montagebasis kommunizieren. Es ist dann zweckmäßig, den sich hieraus ergebenden Paaren der jeweils gleichen Ventileinheit zugeordneter Verbraucher-Anschlusskanäle jeweils ein eigenes Absperrventil zuzuordnen.

Die Anschlusskanäle verlaufen zweckmäßigerweise quer durch eine die Montagefläche und auch die Anschlussfläche aufweisende Montageplatte der Montagebasis hindurch. Diese Montageplatte besteht zweckmäßigerweise aus einem Stück, kann prinzipiell aber auch einen segmentierten Aufbau haben. Von Vorteil ist es jedenfalls, wenn die Montageplatte unmittelbar selbst das gemeinsame Gehäuse für sämtliche vorhandenen Absperrventile bildet, in das die Ventilglieder der Absperrventile ohne zusätzliches eigenständiges Gehäuse eingesetzt sind.

Zweckmäßigerweise kooperieren die Ventilglieder sämtlicher Absperrventile mit einem gemeinsamen Verstellorgan, das beim Betätigen der Zentralabsperreinrichtung aktiviert wird. Im Falle einer mechanischen Betätigung kann es sich hier insbesondere um eine drehbar gelagerte Exzenterwelle handeln, die auf federnd vorgespannte Ventilglieder der Absperrventile einwirkt.

Nachfolgend wird die Erfindung anhand der beiliegenden Zeichnung näher erläutert. In dieser zeigen:
- Figur 1: eine perspektivische Darstellung einer vorteilhaf-ten Ausführungsform der erfindungsgemäßen Ventilanordnung im an einer Montagebasis montierten Zustand eines Ventilblockes,
- Figur 2: die Ventilanordnung aus Figur 1 im abgenommenen Zustand des Ventilblockes bei in Absperrstellung befindlicher Zentralabsperreinrichtung,
- Figur 3: einen Querschnitt durch die Montagebasis und einen sich unmittelbar daran anschließenden Bereich des darauf montierten Ventilblockes in einem Querschnitt gemäß Schnittlinie III-III aus Figur 2 im Bereich zweier Verbraucher-Anschlusskanäle und in der Schließstellung der Zentralabsperreinrichtung,
- Figur 4: die Anordnung aus Figur 3 in der Offenstellung der Zentralabsperreinrichtung,
- Figur 5: einen Querschnitt durch die Montagebasis gemäß Schnittlinie V-V aus Figur 2 im Bereich zweier Versorgungs-Anschlusskanäle und in der Absperrstellung der Zentralabsperreinrichtung, und
- Figur 6: die Anordnung aus Figur 5 in der Offenstellung der Zentralabsperreinrichtung.

Die in ihrer Gesamtheit mit Bezugsziffer 1 bezeichnete Ventilanordnung enthält zwei Hauptkomponenten in Form einer insbesondere im Wesentlichen plattenartigen Montagebasis 2 und einem lösbar an einer bevorzugt ebenen Montagefläche 4 der Montagebasis 2 anbaubaren Ventilblock 3.

In dem Ventilblock 3 sind mehrere unabhängig voneinander betreibbare Ventileinheiten 5 nach Art einer Baugruppe zusammengefasst. Der gesamte Ventilblock 3 ist eine selbsttragende, einheitlich handhabbare Baueinheit.

Die Ventileinheiten 5 sind innerhalb des Ventilblockes 3 in Achsrichtung dessen Längsachse 6 aneinandergereiht, wobei sie vorzugsweise unmittelbar aneinander angesetzt sind. Die Ventileinheiten 5 sind insbesondere plattenförmig gestaltet, mit zu der Längsachse 6 rechtwinkelig verlaufenden Plattenebenen. Die Reihe von Ventileinheiten 5 ist an beiden Stirnseiten von je einem bevorzugt plattenförmigen Abschlusskörper 7 flankiert. Mehrere Zuganker 8 durchziehen die Abschlusskörper 7 und die Ventileinheiten 5 in Achsrichtung der Längsachse 6 und spannen diese Komponenten unter Abdichtung fest zusammen.

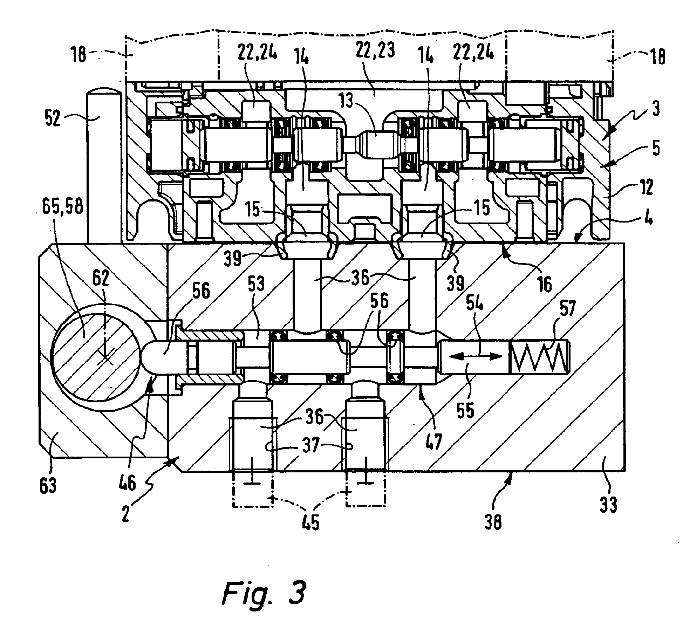

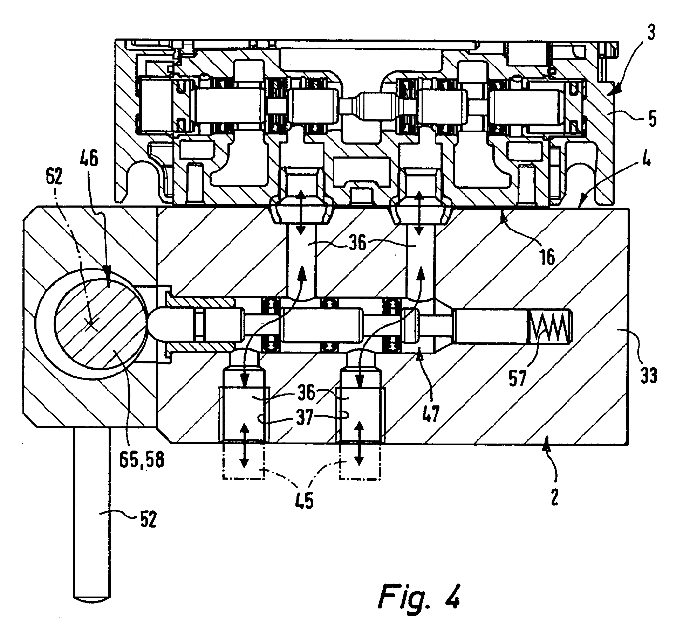

Die Ventileinheiten 5 enthalten, wie insbesondere aus Figuren 3 und 4 ausschnittsweise ersichtlich ist, ein Ventilgehäuse 12 mit mindestens einem darin angeordneten, in verschiedenen Schaltstellungen positionierbaren Ventilglied 13. Das Ventilglied 13 steuert die Fluidbeaufschlagung zweier Verbraucher-Ventilkanäle 14, die mit ersten Kanalmündungen 15 zu einer gemeinsamen Außenfläche des Ventilgehäuses 12 ausmünden. Die ersten Kanalmündungen 15 sämtlicher Ventileinheiten 5 befinden sich an identisch orientierten Außenflächen, die gemeinsam, zusammen mit entsprechend orientierten Außenflächen der Abschlusskörper 7, eine vorzugsweise in einer Ebene liegende Grundfläche 16 des Ventilblockes 3 definieren.

Die Ventileinheiten 5 sind elektrisch betätigbarer Art. Sie erhalten ihre elektrischen Betätigungssignale beispielsweise über mindestens eine außen an dem Ventilblock 3 angeordnete elektrische Schnittstelle 17. Es kann sich um direkt elektrisch betätigbare Ventile handeln, oder aber, wie beim Ausführungsbeispiel, um elektrofluidisch vorgesteuerte Ventile. Die momentane Stellung des Ventilgliedes 13 wird durch fluidische Ausgangssignale mindestens eines elektrisch betätigbaren Vorsteuerventils 18 der jeweiligen Ventileinheit 5 vorgegeben.

Die Ventilgehäuse 12 der einzelnen Ventileinheiten 5 sind in Querrichtung von einzelnen Durchbrechungen 22 durchsetzt, wobei die Durchbrechungen unmittelbar benachbarter Ventileinheiten 5 zuordnungsrichtig miteinander fluchten und sich zu jeweils einem die gesamte Baugruppe aus Ventileinheiten 5 durchsetzenden durchgehenden Fluidkanal 23, 24 ergänzen. Einer dieser durchgehenden Fluidkanäle 23 ist ein Speisekanal, über den sämtliche Ventileinheiten 5 mit dem zu steuernden Druckmedium versorgt werden. Ein oder zwei weitere durchgehende Fluidkanäle 24 sind als Abführkanäle konzipiert und leiten das von anzusteuernden Verbrauchern zurückströmende Druckmedium zur Atmosphäre oder zu einem Tank ab.

In Abhängigkeit von ihrer Schaltstellung können die Ventilglieder 13 veranlassen, dass an den Verbraucher-Ventilkanälen 14 vom Speisekanal 23 stammendes Druckmedium an einen angeschlossenen Verbraucher ausgegeben wird, oder dass vom angeschlossenen Verbraucher zurückströmendes Druckmedium über den mindestens einen Abführkanal 24 abgeführt wird.

Zur Verbindung des Speisekanals 23 mit einer das Druckmedium liefernden Druckquelle P steht der Speisekanal 23 mit einem im Innern des Ventilblockes verlaufenden und über eine zweite Kanalmündung 25 zu der Grundfläche 16 ausmündenden ersten Versorgungs-Ventilblockkanal 26 in Verbindung. Außerdem mündet an der Grundfläche 16 beim Ausführungsbeispiel noch ein zweiter Versorgungs-Ventilblockkanal 27 mit ebenfalls einer zweiten Kanalmündung 25 aus, der die Vorsteuerventile 18 mit Druckmedium versorgt. Er kann allerdings entfallen, wenn die Versorgung der Vorsteuerventile 18 intern in den Ventileinheiten 5 durch Anzapfen des Speisekanals 23 stattfindet.

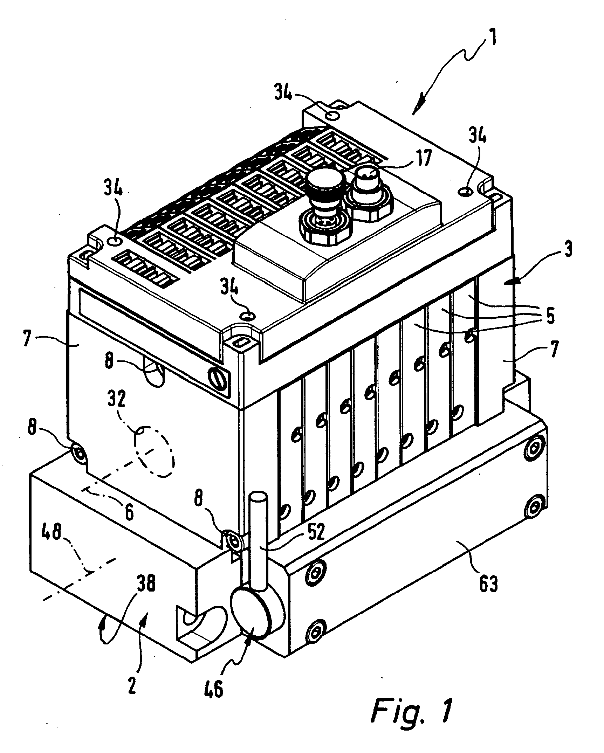

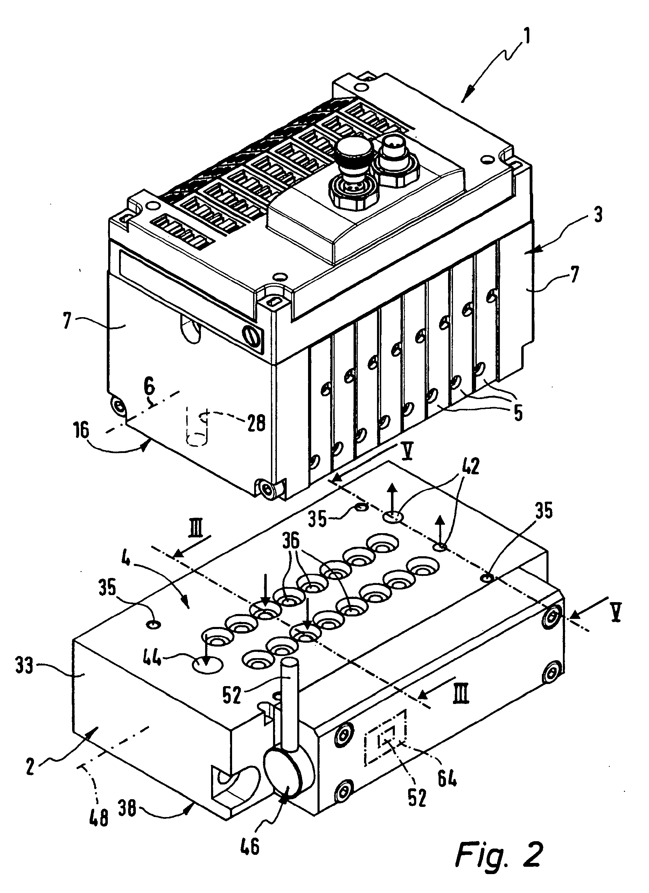

Ein in Figur 2 lediglich gestrichelt angedeuteter Abführ-Ventilblockkanal 28 ist mit dem mindestens einen Abführkanal 24 verbunden und mündet ebenfalls zur Grundfläche 16 aus. Insbesondere wenn das Druckmedium Druckluft ist, können die Abführkanäle 24 aber auch einzeln oder über eine gemeinsame Abführöffnung zu einer abseits der Grundfläche 16 liegenden Außenfläche des Ventilblockes 3 ausmünden, wie dies in Figur 1 bei 32 strichpunktiert angedeutet ist. An dieser mindestens einen Öffnung wird dann zweckmäßigerweise ein Schalldämpfer angebracht.

Die zweiten Kanalmündungen 25 der beiden Versorungs-Ventilblockkanäle 26, 27 sind gemeinsam an einem der beiden Abschlusskörper 7 angeordnet. Der Abführ-Ventilblockkanal 28 mündet exemplarisch am anderen Abschlusskörper 7 aus.

Die bezüglich dem Ventilblock 3 als eigenständige Baueinheit ausgebildete Montagebasis 2 enthält eine vorzugsweise einstückig ausgebildete Montageplatte 33, deren eine großflächige Außenfläche die oben erwähnte Montagefläche 4 bildet. Der Ventilblock 3 kann mit seiner Grundfläche 16 voraus an die Montagefläche 4 angesetzt und in diesem angesetzten Zustand in lösbarer Weise fest mit der Montagebasis 2 verbunden werden. Zur Befestigung dienen beispielsweise nicht weiter abgebildete Befestigungsschrauben, die den Ventilblock 3 durch Befestigungsöffnungen 34 hindurch rechtwinkelig zur Grundfläche 16 durchsetzen und in damit fluchtende Gewindelöcher 35 der Montageplatte 33 einschraubbar sind. Dadurch kann der Ventilblock 3 mit der Montagebasis 2 fest verspannt werden.

Die Montageplatte 33 ist quer zu ihrer Plattenebene von einer der Anzahl der ersten Kanalmündungen 15 entsprechenden Anzahl von Verbraucher-Anschlusskanälen 36 durchsetzt. Die Verbraucher-Anschlusskanäle 36 münden in einem dem Verteilungsmuster der ersten Kanalmündungen 15 entsprechenden Verteilungsmuster zu der Montagefläche 4 aus, so dass bei montiertem Ventilblock 3 je ein Verbraucher-Ventilkanal 14 mit einem Verbraucher-Anschlusskanal 36 kommuniziert. Zur Abdichtung ist jeweils ein Dichtelement 39 zwischengeschaltet.

Jeder Verbraucher-Anschlusskanal 36 mündet über eine Anschlussöffnung 37 zu einer Anschlussfläche 38 der Montageplatte 33 aus, die sich zweckmäßigerweise an der der Grundfläche 16 entgegengesetzten Plattenseite befindet und entgegengesetzt zu der Montagefläche 4 orientiert ist.

In vergleichbarer Weise wie die Verbraucher-Anschlusskanäle 36 durchsetzt eine der Anzahl der Versorgungs-Ventilblockkanäle 26, 27 entsprechende Anzahl von Versorgungs-Anschlusskanälen 42 ebenfalls die Montageplatte 33, um einenends im gleichen Verteilungsmuster wie die Versorgungs-Ventilblockkanäle 26, 27 an der Montagefläche 4 auszumünden und andernends in Anschlussöffnungen 43 überzugehen, die wie die Verbraucher-Anschlusskanäle 36 zu der Anschlussfläche 38 ausmünden. Für die zu treffenden Anschlussmaßnahmen ist es von Vorteil, wenn sich die Anschlussöffnungen 37, 43 der Verbraucher-Anschlusskanäle 36 und der Versorgungs-Anschlusskanäle 42 an ein und derselben Anschlussfläche 38 befinden.

Bei an der Montagefläche 4 montiertem Ventilblock 3 kommunizieren die Versorgungs-Ventilblockkanäle 26, 27 mit je einem der Versorgungs-Anschlusskanäle 42. Auch hier sind zweckmäßigerweise geeignete Dichtelemente zwischengeschaltet.

In vergleichbarer Weise kommuniziert ein gegebenenfalls vorhandener Abführ-Ventilblockkanal 28 im an die Montagebasis 2 angebauten Zustand des Ventilblockes 3 mit einem die Montageplatte 33 durchsetzenden Abführ-Anschlusskanal 44, der andernends zweckmäßigerweise ebenfalls zu der Anschlussfläche 38 ausmündet, von wo aus sich das abzuführende Medium gefasst über eine Fluidleitung ableiten lässt.

Die Anschlussöffnungen 37, 43 sind mit Anschlussmitteln wie Gewinde, Steckverbindungseinrichtungen etc. ausgestattet, die den insbesondere lösbaren Anschluss von Fluidleitungen 45 gestatten, die im Falle der Verbraucher-Anschlusskanäle 36 zu den anzusteuernden Verbrauchern führen und im Falle der Versorgungs-Anschlusskanäle 42 an die Druckquelle P angeschlossen sind. Auf diese Weise erfolgt die Fluidversorgung des Ventilblockes 3 und vorzugsweise auch dessen Fluidentsorgung, sowie vor allem die fluidische Betätigung der Verbraucher, durch die Montagebasis 2 hindurch. Hieraus resultiert der Vorteil, dass bei einem Austausch des Ventilblockes 3 die Fluidleitungen 45 nicht einzeln entfernt werden müssen, sondern an die Montagebasis 2 angeschlossen verbleiben können, die ihrerseits auch vor Ort installiert bleibt. Der Austausch eines Ventilblockes 3, beispielsweise im Zusammenhang mit einer Funktionsstörung, nimmt somit nur sehr wenig Zeit in Anspruch.

Damit ein Ventilblock 3 in praktisch jedem Betriebszustand ausgetauscht werden kann, ohne auf die aktuelle Betätigungssituation der angeschlossenen Verbraucher Rücksicht nehmen zu müssen, ist die Montagebasis 2 mit einer Zentralabsperreinrichtung 46 ausgestattet, die ein gemeinsames Absperren und Öffnen aller Verbraucher-Anschlusskanäle 36 und Versorgungs-Anschlusskanäle 42 ermöglicht. Somit können vor dem Entfernen des Ventilblockes 3 alle Verbraucher-Anschlusskanäle 36 und alle Versorgungs-Anschlusskanäle 42 durch eine zentrale Handhabung abgesperrt werden, so dass zum einen das in den an die Verbraucher-Anschlusskanäle 36 angeschlossenen Fluidleitungen 45 vorhandene Druckmedium eingesperrt ist - mit der Folge, dass die angeschlossenen Verbraucher in ihrem aktuellen Betriebszustand verharren - und zum anderen auch ein Austritt des den Versorgungs-Anschlusskanälen 42 zugeführten Druckmediums an die Atmosphäre verhindert wird.

Der Abführ-Anschlusskanal 44 kann zwar prinzipiell auch in die Zentralabsperreinrichtung 46 integriert sein, erfordert solches aber nicht zwingend, da er ohnehin nur die Verbindung zwischen dem Ventilblock 3 und der drucklosen Atmosphäre herstellt. Beim Ausführungsbeispiel wird er von der Zentralabsperreinrichtung 46 nicht beeinflusst. Sofern im Folgenden allgemein von "Anschlusskanälen" die Rede ist, sind somit nur die Verbraucher-Anschlusskanäle 36 und die Versorgungs-Anschlusskanäle 42 gemeint.

Die Zentralabsperreinrichtung 46 enthält mehrere Absperrventile 47, die jeweils in den Verlauf eines oder mehrerer der Anschlusskanäle 36, 42 eingeschaltet sind und bei denen es sich um Zweistellungsventile handelt, die wahlweise eine den Fluiddurchgang ermöglichende Offenstellung oder eine den Fluiddurchgang verhindernde Schließstellung einnehmen können. Vorzugsweise ist den vorhandenen Anschlusskanälen 36, 42 gruppenweise ein und dasselbe Absperrventil 47 zugeordnet. Jedes der mehreren Absperrventile 47 steuert also gleichzeitig mehrere Anschlusskanäle 36, 42, wobei in diesen Kanalgruppen aber vorzugsweise stets nur gleichartige Anschlusskanäle zusammengefasst sind.

Vorzugsweise ist die Auslegung so getroffen, dass jeder Ventileinheit 5 ein eigenes Absperrventil 47 zugeordnet ist, das die mit dieser Ventileinheit 5 verbundenen Verbraucher-Anschlusskanäle 36 beherrscht. Aufgrund des paarweisen Vorhandenseins von Verbraucher-Ventilkanälen 14 pro Ventileinheit 5 steuert somit jedes Absperrventil 47 diejenigen zwei Verbraucher-Anschlusskanäle 36, die bei montiertem Ventilblock 3 mit ein und derselben Ventileinheit 5 kommunizieren. Den beiden Versorgungs-Anschlusskanälen 42 ist ihrerseits ein eigenes Absperrventil 47 zugeordnet.

Die Paare von untereinander mit jeweils der gleichen Ventileinheit 5 kommunizierenden Verbraucher-Anschlusskanälen 36 münden in Achsrichtung der Längsachse 6 aufeinanderfolgend zu der Montagefläche 4 aus. Das Verteilungsraster entspricht hierbei demjenigen der Ventileinheiten 5. Entsprechendes gilt für die Ausmündungen der Versorgungs-Anschlusskanäle 42. Hieran angepasst sind auch die Absperrventile 47 in der Achsrichtung der zu der Längsachse 6 parallelen Längsachse 48 der Montagebasis 2 aufeinanderfolgend angeordnet, wobei ihre Längsachse rechtwinkelig zu der Längsachse 48 verläuft, so dass sich eine längsseitige Aneinanderreihung ergibt, wie bei den Ventileinheiten 5. Somit können die Absperrventile 47 auf engstem Raum nebeneinander in der Montagebasis 2 untergebracht werden.

Alle Absperrventile 47 können durch Betätigung eines ihnen gemeinsam zugeordneten, sich an Bord der Montagebasis befindenden Zentralbetätigungsgliedes 52 gemeinsam betätigt werden, so dass sie insbesondere gleichzeitig aus der momentan eingenommenen Stellung in die andere Stellung umgeschaltet werden, also beispielsweise aus der Offenstellung in die Schließstellung.

Ein besonders kompakter Aufbau resultiert beim Ausführungsbeispiel dadurch, dass für die Absperrventile 47 keine gesonderten Ventilgehäuse vorhanden sind, sondern dass unmittelbar die Montageplatte 33 die Gehäusefunktion für die Absperrventile übernimmt. Hierzu ist die Montageplatte 33 mit einer Reihe von in Achsrichtung der Längsachse 48 aufeinanderfolgend angeordneten, insbesondere in der gleichen Ebene liegenden und rechtwinkelig zu dieser Längsachse 48 ausgerichteten Ausnehmungen versehen, die Ventilkammern 53 bilden, die in den Verlauf der zu steuernden Anschlusskanäle 36, 42 eingeschaltet sind und jeweils ein gemäß Doppelpfeil 54 bewegbares Ventilglied 55 aufnehmen. Das Ventilglied 55 ist insbesondere als Ventilschieber ausgebildet, der über Längenabschnitte unterschiedlichen Durchmessers verfügt, die mit gehäusefesten, insbesondere von Dichtringen gebildeten Dichtflächen 56 kooperieren können. Die Funktion ist diejenige üblicher Absperrventile, so dass sich weitere Einzelheiten hinsichtlich der Arbeitsweise an dieser Stelle erübrigen.

Die Ventilglieder 55 sind an der untereinander in die gleiche axiale Richtung weisenden Stirnseite mit einem Betätigungsabschnitt 56 versehen - beispielsweise ein Vorsprung - und stehen ständig unter der Stellkraft einer insbesondere rückseitig auf sie einwirkenden, im Innern der Montageplatte 33 untergebrachten Rückstellfeder 57, durch die sie mit ihrem Betätigungsabschnitt 56 gegen den Außenumfang einer Exzenterwelle 58 gedrückt werden. Die Exzenterwelle 58 erstreckt sich parallel zu der Längsachse 48 stirnseitig vor den Betätigungsabschnitten 56 sämtlicher Ventilglieder 55 vorbei und ist um ihre zentrale Mittelachse 62 verdrehbar gelagert. Sie kann direkt in der Montageplatte 33 untergebracht sein oder vorzugsweise in einem eigenständigen Gehäusekörper 63, der seitlich an die Montageplatte 33 angebaut ist und in den die Ventilglieder 55 mit ihrem Betätigungsabschnitt 56 hineinragen.

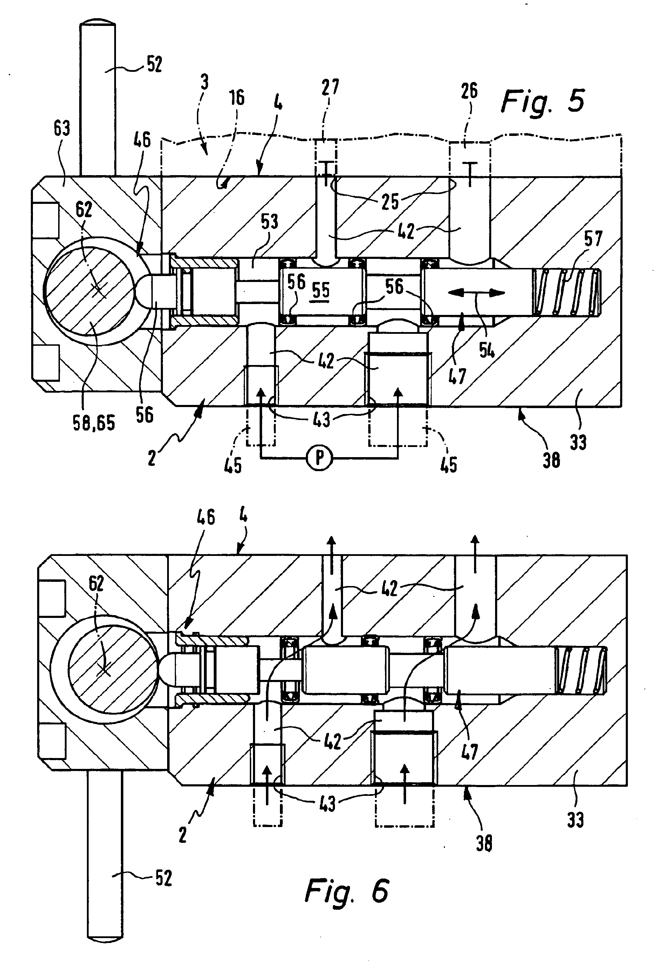

Durch die Rückstellfedern 57 sind die Ventilglieder 55 ständig an den exzentrischen Außenumfang der Exzenterwelle 58 angedrückt. Das oben erwähnte Zentralbetätigungsglied 52 ist beim Ausführungsbeispiel als an der Exzenterwelle 58 außerhalb des Gehäusekörpers 63 angeordneter Hebel ausgebildet. Er lässt sich zwischen einer aus Figuren 1, 2, 3 und 5 ersichtlichen ersten Hebelstellung und einer aus Figuren 4 und 6 ersichtlichen zweiten Hebelstellung verschwenken, wobei dann gleichzeitig die Exzenterwelle 58 verdreht wird. Letzteres führt dazu, dass die sich an der Exzenterwelle 58 abstützenden Ventilglieder 55 je nach Drehrichtung entweder entgegen der Federkraft der Rückstellfeder 57 aus der in Figuren 3 und 5 ersichtlichen Schließstellung in die in Figuren 4 und 6 gezeigte Offenstellung verlagert werden oder - unterstützt durch die Rückstellfeder 57 - in entgegengesetzter Richtung. Exemplarisch definiert die erste Hebelstellung die Schließstellung der Absperrventile 47 und somit die Absperrstellung der Zentralabsperreinrichtung 46. Die zweite Hebelstellung definiert die Offenstellung der Absperrventile 47 und folglich auch die Offenstellung der Zentralabsperreinrichtung 46.

Bei dem gezeigten Ausführungsbeispiel arbeitet das Zentralbetätigungsglied 52 rein mechanisch mit den Ventilgliedern 55 zusammen. Betätigt wird es ohne Fremdenergie rein manuell. Hiervon abweichend wäre aber auch eine Bauform denkbar, bei der das Zentralbetätigungsglied 52 gemäß der strichpunktierten Darstellung in Figur 2 lediglich ein manuell betätigbarer Auslöser, beispielsweise ein Schalter einer elektrischen Betätigungsvorrichtung 64 ist, die bei Aktivierung elektrische Signale hervorruft, die dann ein elektrisches oder elektrofluidisches Umschalten der Absperrventile 47 auslösen.

Als mit sämtlichen Absperrventilen 47 gemeinsam zusammenwirkendes Verstellorgan 65 muss nicht zwingend auf eine Exzenterwelle 58 zurückgegriffen werden. Andere Ausführungsformen sind ebenfalls denkbar. Speziell bei elektrischer oder elektro-fluidischer Betätigung kann jedem Absperrventil 47 auch ein eigenes Verstellorgan zugeordnet sein, beispielsweise ein Elektromagnet oder ein elektro-fluidischer Wandler, die dann bei Aktivierung des Zentralbetätigungsgliedes 52 gemeinsam betätigt werden.

Obgleich prinzipiell das tatsächliche Umschalten der diversen Absperrventile 47 nach Betätigung der Zentralabsperreinrichtung in einer gewissen zeitlichen Aufeinanderfolge abgewikkelt werden könnte, empfiehlt sich die beim Ausführungsbeispiel realisierte Variante eines untereinander stets gleichzeitigen Umschaltens.

Die Versorgungs-Anschlusskanäle 42 können bei Bedarf auch mit einer von der Zentralabsperreinrichtung 46 unabhängigen Absperreinrichtung ausgestattet sein, jedoch ist die Einbeziehung in die Zentralabsperreinrichtung 46 besonders vorteilhaft, weil sich hier wirklich mit einer Aktion alle unter Druck stehenden Anschlusskanäle gemeinsam absperren oder auch wieder freigeben lassen.

## Patentansprüche

1. Ventilanordnung, mit einer Montagebasis (2), die von mehreren Verbraucher-Anschlusskanälen (36) durchsetzt ist, die einerseits an einer gemeinsamen Montagefläche (4) der Montagebasis (2) ausmünden und andererseits zu abseits der Montagefläche (4) an der Montagebasis (2) ausmündenden, den Anschluss von zu Verbrauchern führenden Fluidleitungen (45) ermöglichenden Anschlussöffnungen (37) führen, wobei an der Montagefläche (4) ein mit mehreren unabhängig voneinander betreibbaren Ventileinheiten (5) ausgestatteter Ventilblock (3) mit einer Grundfläche (16) voraus derart montierbar oder montiert ist, dass an der Grundfläche (16) ausmündende, von den einzelnen Ventileinheiten (5) steuerbare Verbraucher-Ventilkanäle (14) der Ventileinheiten (5) mit den Verbraucher-Anschlusskanälen (36) der Montagebasis (2) in fluidischer Verbindung stehen, **dadurch gekennzeichnet, dass** die Montagebasis (2) mit einer ein gemeinsames Absperren und Öffnen aller Verbraucher-Anschlusskanäle (36) ermöglichenden Zentralabsperreinrichtung (46) ausgestattet ist.

2. Ventilanordnung nach Anspruch 1, **dadurch gekennzeichnet, dass** an der Grundfläche (16) des Ventilblockes (3) mindestens ein zum Einspeisen von Fluid in den Ventilblock (3) dienender Versorgungs-Ventilblockkanal (26, 27) ausmündet, der im an der Montagefläche (4) montierten Zustand des Ventilblockes (3) mit einem die Montagebasis (2) durchsetzenden, einerseits zu der Montagefläche (4) ausmündenden und andererseits zu einer dem Anschluss einer zu einer Druckquelle führenden Fluidleitung (45) dienenden Anschlussöffnung (37) führenden Versorgungs-Anschlusskanal (42) in fluidischer Verbindung steht, wobei die Zentralabsperreinrichtung (46) derart ausgebildet ist, dass sie gemeinsam mit dem Absperren und Öffnen der Verbraucher-Anschlusskanäle (36) auch ein Absperren und Öffnen des mindestens einen Versorgungs-Anschlusskanals (42) hervorruft.

3. Ventilanordnung nach Anspruch 1 oder 2, **dadurch gekennzeichnet, dass** alle Anschlussöffnungen (37) an einer gemeinsamen Anschlussfläche (38) der Montagebasis (2) angeordnet sind, die sich zweckmäßigerweise an einer der Montagefläche (4) entgegengesetzten Seite der Montagebasis (2) befindet.

4. Ventilanordnung nach einem der Ansprüche 1 bis 3, **dadurch gekennzeichnet, dass** die Zentralabsperreinrichtung (46) zum Umschalten zwischen ihrer Absperrstellung und ihrer Offenstellung ein sich an Bord der Montagebasis (2) befindendes Zentralbetätigungsglied (52) aufweist.

5. Ventilanordnung nach Anspruch 4, **dadurch gekennzeichnet, dass** das Zentralbetätigungsglied (52) ein das Umschalten der Zentralabsperreinrichtung (46) insbesondere aufgrund manueller Betätigung, durch rein mechanische Interaktion hervorrufendes Element ist, insbesondere ein verschwenkbarer Hebel.

6. Ventilanordnung nach Anspruch 4 oder 5, **dadurch gekennzeichnet, dass** das Zentralbetätigungsglied (52) Bestandteil einer das Umschalten der Zentralabsperreinrichtung (46) durch elektrische Signale hervorrufenden elektrischen Betätigungsvorrichtung (64) ist.

7. Ventilanordnung nach einem der Ansprüche 1 bis 6, **dadurch gekennzeichnet, dass** die Zentralabsperreinrichtung (46) mindestens ein in den Verlauf des mindestens einen Verbraucher-Anschlusskanals (36) eingeschaltetes Absperrventil (47) aufweist, das den zugeordneten mindestens einen Verbraucher-Anschlusskanal (36) wahlweise verschließen oder öffnen kann.

8. Ventilanordnung nach einem der Ansprüche 1 bis 7, **dadurch gekennzeichnet, dass** mehreren Verbraucher-Anschlusskanälen (36) oder mehreren Gruppen von Verbraucher-Anschlusskanälen (36) jeweils ein eigenes Absperrventil (47) individuell zugeordnet ist, wobei diese mehreren Absperrventile (47) bei Betätigung der Zentralabsperreinrichtung (52) gemeinsam umgeschaltet werden.

9. Ventilanordnung nach Anspruch 8, **dadurch gekennzeichnet, dass** zumindest mehrere Ventileinheiten (5) des Ventilblockes (3) jeweils über zwei an der Grundfläche (13) ausmündende Verbraucher-Ventilkanäle (14) verfügen, wobei denjenigen Verbraucher-Anschlusskanälen (36), die mit den Verbraucher-Ventilkanälen (14) der gleichen Ventileinheit (5) kommunizieren, jeweils ein eigenes Absperrventil (47) zugeordnet ist.

10. Ventilanordnung nach einem der Ansprüche 7 bis 9, **dadurch gekennzeichnet, dass** die Zentralabsperreinrichtung (46) mindestens ein in den Verlauf des mindestens einen Versorgungs-Anschlusskanals (42) eingeschaltetes Absperrventil (47) aufweist, das diesen mindestens einen Versorgungs-Anschlusskanal (42) wahlweise verschließen oder freigeben kann.

11. ventilanordnung nach Anspruch 10, **dadurch gekennzeichnet, dass** das mindestens eine dem mindestens einen Versorgungs-Anschlusskanal (42) zugeordnete Absperrventil (47) und das mindestens eine dem mindestens einen Verbraucher-Anschlusskanal (36) zugeordnete Absperrventil (47) als gesonderte Absperrventile (47) ausgebildet sind.

12. Ventilanordnung nach einem der Ansprüche 1 bis 11, **dadurch gekennzeichnet, dass** die Montagefläche (4) an einer von den Anschlusskanälen (36, 42) durchsetzten, insbesondere als einstückiger Körper ausgebildeten Montageplatte (33) der Montagebasis (2) angeordnet ist.

13. Ventilanordnung nach Anspruch 12 in Verbindung mit einem der Ansprüche 7 bis 11, **dadurch gekennzeichnet, dass** die Montageplatte (33) das gemeinsame Ventilgehäuse sämtlicher vorhandenen Absperrventile (47) bildet.

14. Ventilanordnung nach Anspruch 13, **dadurch gekennzeichnet, dass** das mindestens eine Absperrventil ein unmittelbar in der Montageplatte (33) aufgenommenes ventilglied (55) aufweist.

15. Ventilanordnung nach einem der Ansprüche 7 bis 14, **dadurch gekennzeichnet, dass** die vorhandenen Absperrventile (47) jeweils ein bewegliches Ventilglied (55) enthalten, wobei sämtliche Ventilglieder (55) mit einem gemeinsamen Verstellorgan (65) zusammenwirken, das beim Betätigen der Zentralabsperreinrichtung (46) zum gemeinsamen Umschalten sämtlicher Ventilglieder (55) angetrieben wird, wobei das Verstellorgan (65) zweckmäßigerweise eine drehbar gelagerte Exzenterwelle (58) ist, die auf federnd gegen sie vorgespannte Ventilglieder (55) der Absperrventile (47) einwirkt.

## Claims

1. Valve assembly having a mounting base (2) through which pass several load connecting passages (36) which terminate at a joint mounting surface (4) of the mounting base (2) on the one hand and at the other hand lead to connecting ports (37) terminating at the mounting base (2) remote from the mounting surface (4) to enable fluid lines (45) leading to the loads to be connected, wherein a valve block (3) equipped with a plurality of independently operated valve units (5) is or can be mounted on the mounting surface (4) with a base surface (16) leading in such a way that load valve passages (14) of the valve units (5) terminating at the base surface (16) and controllable by the individual valve units (5) are in fluidic connection with the load connecting passages (36) of the mounting base (2), **characterised in that** the mounting base (2) is provided with a central shutoff device (46) allowing a common shutting-off or opening of all load connecting passages (36).

2. Valve assembly according to claim 1, **characterised in that** at least one supply valve block passage (26, 27) for feeding fluid into the valve block (3) terminates at the base surface (16) of the valve block (3), which supply valve block passage (26, 27) is in the mounted state of the valve block (3) in fluidic connection with a supply connecting passage (42) passing through the mounting base (2) and terminating at the mounting surface (4) on the one hand while on the other hand leading to a connecting port (37) used for the connection of a fluid line (45) leading to a pressure source, wherein the central shutoff device (46) is designed such that, together with the shutting-off and opening of the load connecting passages (36), it also causes a shutting-off and opening of the at least one supply connecting passage (42).

3. Valve assembly according to claim 1 or 2, **characterised in that** all connecting ports (37) are arranged on a common connecting surface (38) of the mounting base (2), this common connecting surface (38) being expediently provided on a side of the mounting base 2 which is opposite the mounting surface (4).

4. Valve assembly according to any of claims 1 to 3, **characterised in that** the central shutoff device (46) comprises a central actuating member (52) on board of the mounting base (2) for switching between its shutoff position and its open position.

5. Valve assembly according to claim 4, **characterised in that** the central actuating member (52) is an element, in particular a pivotable lever, which causes a switching of the central shutoff device (46) by purely mechanical interaction, in particular based on manual operation.

6. Valve assembly according to claim 4 or 5, **characterised in that** the central actuating member (52) is a part of an electric actuating device (64) which causes a switching of the central shutoff device (46) by electric signals.

7. Valve assembly according to any of claims 1 to 6, **characterised in that** the central shutoff device (46) comprises at least one shutoff valve (47) which is installed into the run of the at least one load connecting passage (36) and which can optionally block or open the associated at least one load connecting passage (36).

8. Valve assembly according to any of claims 1 to 7, **characterised in that** a dedicated shutoff valve (47) is individually assigned to each of several load connecting passages (36) or several groups of load connecting passages (36), these several shutoff valves (47) being switched together if the central shutoff device (46) is activated.

9. Valve assembly according to claim 8, **characterised in that** at least several of the valve units (5) of the valve block (3) have two load valve passages (14) terminating at the base surface (13), a dedicated shutoff valve (47) being assigned to each of the load connecting passages (36) which communicate with the load valve passages (14) of the same valve unit (5).

10. Valve assembly according to any of claims 7 to 9, **characterised in that** the central shutoff device (46) comprises at least one shutoff valve (47) which is installed into the run of the at least one supply connecting passage (42) and which can optionally block or open the associated at least one supply connecting passage (42).

11. Valve assembly according to claim 10, **characterised in that** the at least one shutoff valve (47) assigned to the at least one supply connecting passage (42) and the at least one shutoff valve (47) assigned to the at least one load connecting passage (36) are designed as separate shutoff valves (47).

12. Valve assembly according to any of claims 1 to 11, **characterised in that** the mounting surface (4) is located on a mounting plate (33) of the mounting base (2) through which the connecting passages (36, 42) pass and which is in particular designed as a one-piece body.

13. Valve assembly according to claim 12 in combination with any of claims 7 to 11, **characterised in that** the mounting plate (33) forms the common valve housing of all shutoff valves (47) provided.

14. Valve assembly according to claim 13, **characterised in that** the at least one shutoff valve has a valve member (55) which is directly accommodated in the mounting plate (33).

15. Valve assembly according to any of claims 7 to 14, **characterised in that** each of the shutoff valves (47) provided has a movable valve member (55), wherein all valve members (55) act together with a common adjusting element (65) which, if the central shutoff device (46) is activated, is driven to switch all valve members (55) together, the adjusting element (65) expediently being a rotatably mounted eccentric shaft (58) which acts on valve members (55) of the shutoff valves (47) which are spring-loaded against the eccentric shaft (58).

## Revendications

1. Ensemble de soupapes, comprenant une base de montage (2), qui est traversée par plusieurs canaux de raccordement de consommateurs (36), lesquels débouchent d'un côté au niveau d'une surface de montage (4) commune de la base de montage (2) et qui mènent de l'autre côté aux orifices de raccordement (37) débouchant sur le côté de la surface de montage (4) au niveau de la base de montage (2), permettant le raccordement de conduites de fluide (45) menant aux consommateurs, sachant qu'un bloc de soupape (3) présentant une surface de base (16) et équipé de plusieurs unités de soupape (5) fonctionnant indépendamment les unes des autres peut être monté ou est monté au préalable au niveau de la surface de montage (4) de telle manière que des canaux de soupape de consommateurs (14) des unités de soupape (5), débouchant au niveau de la surface de base (16) et pouvant être commandés par les diverses unités de soupape (5), sont en liaison fluidique avec les canaux de raccordement de consommateurs (36) de la base de montage (2), **caractérisé en ce que** la base de montage (2) est équipée d'un dispositif d'arrêt central (46) permettant un arrêt et une ouverture en commun de tous les canaux de raccordement de consommateurs (36).

2. Ensemble de soupapes selon la revendication 1, **caractérisé en ce qu'**au moins un canal de bloc de soupape d'alimentation (26, 27) servant à alimenter le bloc de soupape (3) en fluide débouche au niveau de la surface de base (16) du bloc de soupape (3), lequel canal de bloc de soupape d'alimentation se trouve en liaison fluidique avec un canal de raccordement d'alimentation (42) traversant la base de montage (2) et débouchant d'un côté en direction de la surface de montage (4) et menant de l'autre côté à un orifice de raccordement (37) servant au raccordement d'une conduite de fluide (45) menant à une source de pression lorsque le bloc de soupape (3) est monté au niveau de la surface de montage (4), sachant que le dispositif d'arrêt central (46) est réalisé de telle manière qu'il entraîne en même temps que l'arrêt et l'ouverture des canaux de raccordement de consommateurs (36), également un arrêt et une ouverture du canal de raccordement d'alimentation (42) au moins au nombre de un.

3. Ensemble de soupapes selon la revendication 1 ou 2, **caractérisé en ce que** tous les orifices de raccordement (37) sont disposés au niveau d'une surface commune de raccordement (38) de la base de montage (2), laquelle se trouve de manière appropriée au niveau d'un côté de la base de montage (2), opposé à la surface de montage (4).

4. Ensemble de soupapes selon l'une quelconque des revendications 1 à 3, **caractérisé en ce que** le dispositif d'arrêt central (46) destiné à être commuté entre sa position d'arrêt et sa position ouverte présente un organe d'actionnement central (52) se trouvant sur le bord de la base de montage (2).

5. Ensemble de soupapes selon la revendication 4, **caractérisé en ce que** l'organe d'actionnement central (52) est un élément entraînant, grâce à une interaction purement mécanique, la commutation du dispositif d'arrêt central (46) en particulier du fait de l'actionnement manuel, est en particulier un levier pouvant pivoter.

6. Ensemble de soupapes selon la revendication 4 ou 5, **caractérisé en ce que** l'organe d'actionnement central (52) fait partie intégrante d'un système d'actionnement (64) électrique entraînant, grâce à des signaux électriques, la commutation du dispositif d'arrêt central (46).

7. Ensemble de soupapes selon l'une quelconque des revendications 1 à 6, **caractérisée en ce que** le dispositif d'arrêt central (46) présente au moins une soupape d'arrêt (47) intercalé dans le tracé du canal de raccordement de consommateurs (36) au moins au nombre de un, laquelle soupape d'arrêt peut fermer ou ouvrir au choix le canal de raccordement de consommateurs (36) associé au moins au nombre de un.

8. Ensemble de soupapes selon l'une quelconque des revendications 1 à 7, **caractérisé en ce que** respectivement une soupape d'arrêt (47) propre est associée individuellement à plusieurs canaux de raccordement de consommateurs (36) ou à plusieurs groupes de canaux de raccordement de consommateurs (36), sachant que lesdites nombreuses soupapes d'arrêt (47) sont commutées ensemble lors de l'actionnement du dispositif d'arrêt central (52).

9. Ensemble de soupapes selon la revendication 8, **caractérisé en ce qu'**au moins plusieurs unités de soupape (5) du bloc de soupape (3) disposent respectivement de deux canaux de soupape de consommateurs (14) débouchant au niveau de la surface de base (13), sachant que respectivement une soupape d'arrêt (47) propre est associée précisément aux canaux de raccordement de consommateurs (36), qui communiquent avec les canaux de soupape de consommateurs (14) de la même unité de soupape (5).

10. Ensemble de soupapes selon l'une quelconque des revendications 7 à 9, **caractérisé en ce que** le dispositif d'arrêt central (46) présente au moins une soupape d'arrêt (47) intercalée dans le tracé du canal de raccordement d'alimentation (42) au moins au nombre de un, laquelle soupape d'arrêt peut aux choix fermer ou libérer au moins un canal de raccordement d'alimentation (42).

11. Ensemble de soupapes selon la revendication 10, **caractérisé en ce que** la soupape d'arrêt (47) au moins au nombre de une, associée au canal de raccordement d'alimentation (42) au moins au nombre de un et la soupape d'arrêt (47) au moins au nombre de une, associée au canal de raccordement de consommateurs (36) au moins au nombre de un sont réalisées sous la forme de soupapes d'arrêt (47) isolées.

12. Ensemble de soupapes selon l'une quelconque des revendications 1 à 11, **caractérisé en ce que** la surface de montage (4) est disposée au niveau d'une plaque de montage (33) de la base de montage (2), laquelle plaque de montage est traversée par les canaux de raccordement (36, 42) et est réalisée en particulier sous la forme d'un corps d'un seul tenant.

13. Ensemble de soupapes selon la revendication 12 en lien avec l'une quelconque des revendications 7 à 11, **caractérisé en ce que** la plaque de montage (33) forme le carter de soupape commun à toutes les soupapes d'arrêt (47) présentes.

14. Ensemble de soupapes selon la revendication 13, **caractérisé en ce que** la soupape d'arrêt au moins au nombre de une présente un organe de soupape (55) logé directement dans la plaque de montage (33).

15. Ensemble de soupapes selon l'une quelconque des revendications 7 à 14, **caractérisé en ce que** les soupapes d'arrêt (47) présentes comportent respectivement un organe de soupape (55) mobile, sachant que tous les organes de soupape (55) coopèrent avec un organe de déplacement (65) commun, qui est entraîné lors de l'actionnement du dispositif d'arrêt central (46) aux fins de la commutation commune de tous les organes de soupape (55), sachant que l'organe de déplacement (65) est de manière appropriée un arbre excentrique (58) logé de manière à pouvoir tourner et agissant de manière élastique contre les organes de soupape (55) précontraints des soupapes d'arrêt (47).
